# EUROPÄISCHE PATENTANMELDUNG

(11) **EP 1 884 414 A1**
(43) Veröffentlichungstag der Anmeldung: **06.02.2008**
(21) Anmeldenummer: 06015352.5
(22) Anmeldetag: 24.07.2006
(51) Int. Cl.: B60R 16/02

(54) **Vorrichtung zur Erfassung einer Beschädigung eines Fahrzeugs**

(71) Anmelder: Delphi Technologies, Inc., Troy, Michigan 48007 (US)
(72) Erfinder: Noll, Diethelm, 57589 Birkenbeul (DE); Denkelmann, Rainer, 51109 Köln (DE); Hupertz, Stefan, 57462 Olpe (DE); Hombach, Frank, 51674 Wiehl (DE)
(74) Vertreter: Manitz, Finsterwald & Partner GbR

(57) **Zusammenfassung**

Die Erfindung betrifft eine Vorrichtung zur Erfassung einer Beschädigung eines Fahrzeugs mit einer an dem Fahrzeug vorgesehenen Sensoreinrichtung zur Aufnahme eines Schwingungssignals und einer mit der Sensoreinrichtung verbundenen Auswerteeinheit zur Auswertung eines durch die Sensoreinrichtung aufgenommenen Schwingungssignals, wobei die Auswerteeinheit ein Mittel zur Durchführung einer Frequenzanalyse des Schwingungssignals aufweist. Die Erfindung betrifft auch ein Verfahren zur Erfassung einer Beschädigung eines Fahrzeugs.

## Beschreibung

Die vorliegende Erfindung betrifft eine Vorrichtung mit einer an einem Fahrzeug vorgesehenen Sensoreinrichtung zur Aufnahme eines Schwingungssignals und einer mit der Sensoreinrichtung verbundenen Auswerteeinheit zur Auswertung des durch die Sensoreinrichtung aufgenommenen Schwingungssignals.

Eine derartige Vorrichtung ist grundsätzlich bekannt. Sie wird beispielsweise als Alarmanlage in einem Kraftfahrzeug eingesetzt, um einen Diebstahlversuch oder einen Einbruchsversuch anzuzeigen.

Durch mutwillige oder unabsichtliche Beschädigung des Lacks und/oder der Scheiben von Fahrzeugen können erhebliche Reparaturkosten entstehen, die meist der Fahrzeugbesitzer zu tragen hat, da ein Verursacher der Beschädigung nur selten zu ermitteln ist. Dieses Problem tritt nicht nur bei Kraftfahrzeugen auf, sondern auch bei schienengebundenen Fahrzeugen und Wasserfahrzeugen. Der Begriff "Fahrzeug" umfasst im Rahmen der vorliegenden Erfindung daher alle diese Verkehrsmittel.

Der Erfindung liegt die Aufgabe zugrunde, eine Vorrichtung zu schaffen, durch welche eine Beschädigung des Lacks und/oder einer Scheibe eines Fahrzeugs ermittelbar ist.

Zur Lösung der Aufgabe ist eine Vorrichtung mit den Merkmalen des Anspruchs 1 vorgesehen.

Die erfindungsgemäße Vorrichtung zur Erfassung einer Beschädigung eines Fahrzeugs umfasst eine an dem Fahrzeug angebrachte Sensoreinrichtung zur Aufnahme eines, insbesondere akustischen und/oder mechanischen, Schwingungssignals und eine mit der Sensoreinrichtung verbundene Auswerteeinheit zur Auswertung eines durch die Sensoreinrichtung aufgenommenen Schwingungssignals mittels Frequenzanalyse.

Die Frequenzanalyse ermöglicht eine besonders genaue Auswertung des aufgenommenen Schwingungssignals und somit einen besonders sicheren Rückschluss auf die Ursache bzw. die Quelle des Schwingungssignals. So lassen sich verschiedene äußere Einwirkungen auf ein Fahrzeug durch die dabei auftretenden messbaren Frequenzspektren eindeutig identifizieren und klassifizieren.

Auf diese Weise ist es erfindungsgemäß möglich, eine Maßnahme zum Schutz des Fahrzeugs und/oder zur Ermittlung einer das Fahrzeug beschädigenden Person einzuleiten, wenn eine bestimmte Form einer Beschädigung des Fahrzeugs anhand eines zugeordneten Frequenzspektrums ermittelt wird. Dabei trägt die Frequenzanalyse dazu bei, eine irrtümliche Auslösung zum Beispiel eines Alarms zu vermeiden.

Vorteilhafte Ausbildungen der Erfindung sind den Unteransprüchen, der Beschreibung und der Zeichnung zu entnehmen.

Gemäß einer Ausführungsform der erfindungsgemäßen Vorrichtung weist die Auswerteeinheit ein Mittel zur Filterung eines Schwingungssignals auf. Dies ermöglicht eine Beseitigung von nicht benötigten oder störenden Frequenzanteilen aus dem aufgenommenen Schwingungssignal vor der Frequenzanalyse. Vorteilhafterweise ist die Filtercharakteristik an die Art der Sensoreinrichtung angepasst, da jeder Sensortyp charakteristische Merkmale für Grenzfrequenzen und Linearität des Frequenzgangs aufweist.

In Anbetracht der Größe der zu überwachenden Flächen des Fahrzeugslacks bzw. der Fahrzeugfenster ist es vorteilhaft, wenn die Sensoreinrichtung nicht nur ein Sensorelement, sondern mehrere Sensorelemente umfasst, die z. B. an der Karosserie und/oder an mindestens einer Scheibe des Fahrzeugs angebracht sein können. Auf diese Weise lassen sich selbst größere Fahrzeuge wie Omnibusse oder Züge zuverlässig überwachen und durch die räumliche Nähe der Sensorelemente zum jeweiligen Überwachungsbereich optimale Messergebnisse erzielen.

Als Sensorelemente kommen zum Beispiel Mikrophone zur Aufnahme von Geräuschen, d.h. also akustischen Schwingungen, sowie Vibrationssensoren oder Beschleunigungssensoren zur Aufnahme von mechanischen Schwingungen am Fahrzeuglack und/oder an einer Fahrzeugsscheibe in Frage. Vorteilhafterweise sind die Vibrations- oder Beschleunigungssensoren mehrachsig aufgebaut. Dadurch ist nicht nur die Montage bzw. Positionierung der Sensoren erleichtert, sondern es können auch mehr Signalanteile des Schwingungssignals erfasst werden. Die Sensorelemente der Sensoreinrichtung können wahlweise alle vom gleichen Typ sein oder unterschiedliche Typen von Sensoren umfassen. Letzteres ermöglicht eine zuverlässigere Detektion einer Beschädigung des Fahrzeugs und trägt zur Vermeidung einer irrtümlichen Auslösung eines Alarms bei.

Die Auswerteeinheit kann mit mindestens einer Alarmverarbeitungseinrichtung, wie zum Beispiel einem Mittel zur Ausgabe eines akustischen und/oder optischen Alarmsignals, einem Mittel zur Kommunikation mit einer zentralen Überwachungseinrichtung oder einem Mobiltelefon oder einem Mittel zur Aufnahme von Einzelbildern oder Bildsequenzen verbunden sein, welche bei Detektion einer Beschädigung anhand eines ermittelten Frequenzspektrums durch die Auswerteeinheit aktivierbar ist.

Beispielsweise kann ein akustisches und/oder optisches Alarmsignal ausgelöst werden, um einen Täter davon abzuhalten, weitere Beschädigungen vorzunehmen, und/oder Personen herbeizurufen, um den Täter zu fassen oder zu vertreiben. Auch kann diese Art von Alarmsignal insbesondere bei öffentlichen Verkehrsmitteln dazu dienen, Mitarbeiter des Verkehrsbetriebs auf eine Beschädigung eines Fahrzeugs aufmerksam zu machen.

Alternativ oder zusätzlich kann eine zentrale Überwachungseinrichtung alarmiert werden. Dies ist zum Beispiel bei der Überwachung eines abgestellten Fahrzeugs eines öffentlichen Verkehrsbetriebs nützlich. So kann bei der Detektion einer Beschädigung des Fahrzeugs eine Überwachungszentrale alarmiert werden, die daraufhin eine oder mehrere Personen mit der Ergreifung des Täters bzw. der Täter beauftragen kann. Anstatt einen Alarm an eine zentrale Überwachungseinrichtung zu senden, kann der Alarm auch an ein Mobiltelefon übertragen werden. Bei einem abgestellten Kraftfahrzeug kann der Fahrzeugbesitzer im Falle einer Beschädigung seines Fahrzeugs somit umgehend informiert werden.

Alternativ oder zusätzlich kann durch die Auswerteeinheit ferner die Aufnahme von Einzelbildern oder Bildsequenzen ausgelöst werden, um dadurch eine spätere Identifizierung des Täters zu erleichtern.

Weiterer Gegenstand der Erfindung ist außerdem ein Verfahren mit den Merkmalen des Anspruchs 11, durch welches sich die voranstehenden Vorteile entsprechend erreichen lassen.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine schematische Darstellung einer erfindungsgemäßen Vorrichtung;
- Fig. 2: eine Seitenansicht eines Kraftfahrzeugs mit einer Vorrichtung von Fig. 1; und
- Fig. 3: eine schematische Darstellung zweier Anbindungsmöglichkeiten von mehreren Sensorelementen an eine Auswerteeinheit der Vorrichtung von Fig. 1.

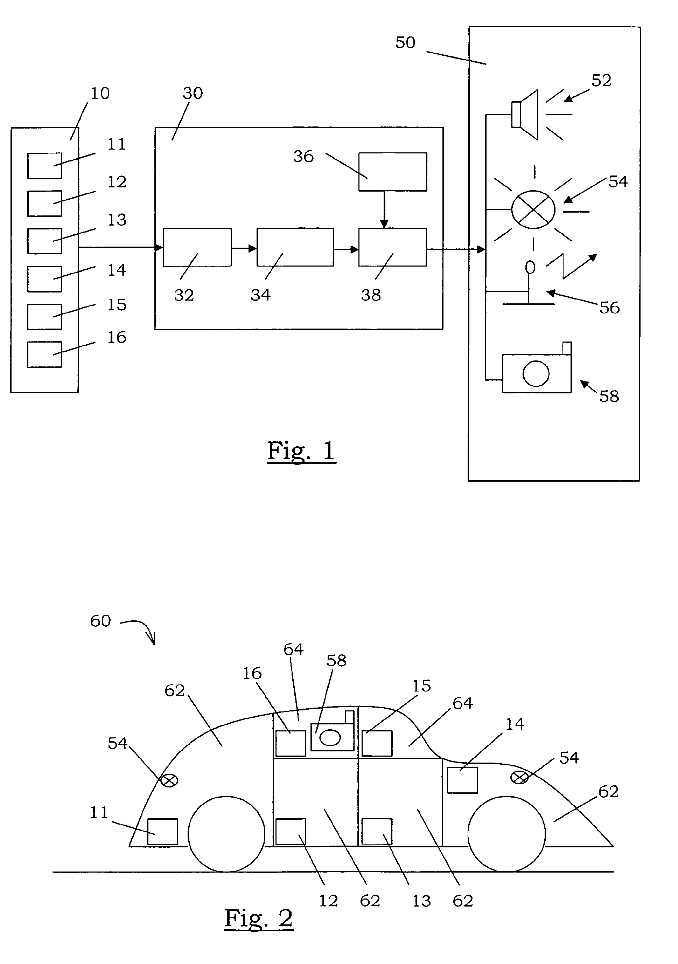

Fig. 1 zeigt eine erfindungsgemäße Vorrichtung zur Erfassung einer Beschädigung eines Fahrzeugs, im vorliegenden Ausführungsbeispiel eines Kraftfahrzeugs 60 (Fig. 2). Die Vorrichtung umfasst eine Sensoreinrichtung 10, eine Auswerteeinheit 30 und eine Alarmverarbeitungseinrichtung 50, wobei die Auswerteeinheit 30 mit der Sensoreinrichtung 10 und der Alarmverarbeitungseinrichtung 50 verbunden ist.

Die Sensoreinrichtung 10 umfasst mehrere gleichartige oder verschiedene Sensorelemente 11 - 16 zur Detektion von akustischen und/oder mechanischen Schwingungssignalen. Bei Erfassung eines Schwingungssignals überträgt die Sensoreinrichtung 10 dieses in Form eines elektrischen Signals an die Auswerteeinheit 30.

Die Auswerteeinheit 30 umfasst eine Filtereinrichtung 32 zur Filterung des Schwingungssignals, eine Frequenzanalyseeinrichtung 34 zur Ermittlung des Frequenzspektrums des Schwingungssignals und einen Entscheidungsfinder 38, der mit Hilfe von in einem Speicher 36 abgespeicherten Vergleichsspektren das von der Frequenzanalyseeinrichtung 34 ermittelte Frequenzspektrum analysiert. Die Frequenzanalyseeinrichtung 34 kann sich zur Durchführung ihrer Aufgabe zum Beispiel der Fast Fourier Transformation bedienen. Wenn der Entscheidungsfinder 38 durch Vergleichen des ermittelten Frequenzspektrums mit den abgespeicherten Vergleichsspektren 36 zu dem Ergebnis gelangt, dass das aufgenommene Schwingungssignal aus einer Beschädigung des Fahrzeugs 60 resultiert, überträgt die Auswerteeinheit 30 ein Alarmsignal an die Alarmverarbeitungseinrichtung 50.

Die Alarmverarbeitungseinrichtung 50 führt nach Erhalt des Alarmsignals je nach Konfiguration eine oder mehrere Aktionen aus. Zum Beispiel kann sie einen akustischen Alarm über einen Lautsprecher oder eine Hupe 52 des Fahrzeugs 60 und/oder einen optischen Alarm durch einen Blinker oder eine Leuchte 54 des Fahrzeugs 60 ausgeben. Alternativ oder zusätzlich ist die Übertragung einer Alarmmeldung z.B. mittels eines Senders 56 über Funk an eine zentrale Überwachungseinrichtung oder ein Mobiltelefon und/oder die Aufnahme von Einzelbildern oder Bildsequenzen der Fahrzeugumgebung mit einer am Fahrzeug 60 installierten Kamera 58 möglich.

In Fig. 2 ist eine mögliche Anordnung der Sensorelemente 11 - 16 an dem Kraftfahrzeug 60 dargestellt. Wie Fig. 2 zeigt, sind im Wesentlichen alle beschädigungsgefährdeten Außenbereiche des Fahrzeugs 60 mit jeweils einem Sensorelement versehen. Dabei sind die Sensorelemente 11 - 14 an Karosserieteilen 62 angebracht und die Sensorelemente 15 und 16 an Scheiben 64 befestigt.

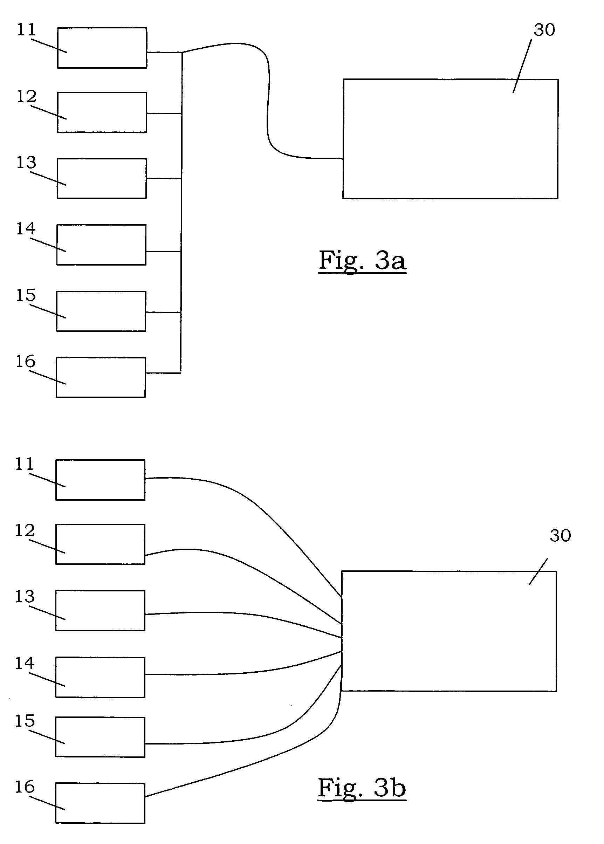

Fig. 3a und 3b zeigen zwei Möglichkeiten zum Verbinden der Sensorelemente 11 - 16 mit der Auswerteeinheit 30.

Fig. 3a stellt eine Busstruktur dar, bei der alle Sensorelemente 11 - 16 über eine einzige Leitung an die Auswerteeinheit 30 angeschlossen sind. Dies reduziert den Verkabelungsaufwand, setzt aber voraus, dass die Sensorelemente 11 - 16 die Kommunikation mit einem auf dem Bus verwendeten Kommunikationsprotokoll beherrschen.

Fig. 3b zeigt eine Sternstruktur, bei welcher jedes Sensorelement 11 - 16 direkt mit der Auswerteeinheit 30 verbunden ist. Dies erlaubt die Verwendung kostengünstigerer Sensorelemente, bedeutet jedoch einen erhöhten Verkabelungsaufwand.

In dem voranstehend beschriebenen Ausführungsbeispiel erfolgt die Signalübertragung von den Sensorelementen 11 - 16 an die Auswerteeinheit 30 in bereits digitalisierter Form. Die Sensorelemente 11 - 16 weisen zu diesem Zweck jeweils einen Analog/Digital-Wandler auf. Zusätzlich können sie sogar über eine Filterschaltung verfügen, so dass jedes Sensorelement 11 - 16 bereits gefilterte Daten überträgt.

Alternativ kann die Übertragung der Sensorsignale an die Auswerteeinheit 30 aber auch in analoger Form erfolgen. In diesem Fall findet eine analoge Filterung im Eingangsbereich der Auswerteeinheit 30 statt, bevor eine Analog/ Digital-Umwandlung und anschließend die Frequenzanalyse durchgeführt wird.

### Bezugszeichenliste

- 10: Sensoreinrichtung
- 11: Sensorelement
- 12: Sensorelement
- 13: Sensorelement
- 14: Sensorelement
- 15: Sensorelement
- 16: Sensorelement
- 30: Auswerteeinheit
- 32: Filtereinrichtung
- 34: Frequenzanalyseeinrichtung
- 36: Speicher
- 38: Entscheidungsfinder
- 50: Alarmverarbeitungseinrichtung
- 52: Hupe
- 54: Leuchte
- 56: Sender
- 58: Kamera
- 60: Kraftfahrzeug
- 62: Karosserieteil
- 64: Scheibe

## Patentansprüche

1. Vorrichtung zur Erfassung einer Beschädigung eines Fahrzeugs (60) mit einer an dem Fahrzeug vorgesehenen Sensoreinrichtung (10) zur Aufnahme eines Schwingungssignals und einer mit der Sensoreinrichtung (10) verbundenen Auswerteeinheit (30) zur Auswertung eines durch die Sensoreinrichtung (10) aufgenommenen Schwingungssignals, wobei die Auswerteeinheit (30) ein Mittel (34) zur Durchführung einer Frequenzanalyse des Schwingungssignals aufweist.

2. Vorrichtung nach Anspruch 1,
**dadurchgekennzeichnet**, dass
die Auswerteeinheit (30) ein Mittel (32) zur Filterung eines Schwingungssignals umfasst.

3. Vorrichtung nach Anspruch 1 oder 2,
**dadurch gekennzeichnet, dass**
die Sensoreinrichtung (10) mindestens ein Sensorelement (11 - 16) und bevorzugt mehrere Sensorelemente umfasst.

4. Vorrichtung nach Anspruch 3,
**dadurchgekennzeichnet**, dass
mindestens ein Sensorelement (11 - 16) an einer Karosserie (62) und/oder an einer Scheibe (64) des Fahrzeugs angeordnet ist.

5. Vorrichtung Anspruch 3 oder 4,
**dadurch gekennzeichnet, dass**
mindestens ein Sensorelement (11 - 16) durch ein Mikrophon gebildet ist.

6. Vorrichtung nach einem der Ansprüche 3 bis 5,
**dadurch gekennzeichnet, dass**
mindestens ein Sensorelement (11 - 16) durch einen, insbesondere mehrachsigen, Vibrationssensor gebildet ist.

7. Vorrichtung nach einem der Ansprüche 3 bis 6,
**dadurch gekennzeichnet, dass**
mindestens ein Sensorelement (11 - 16) durch einen, insbesondere mehrachsigen, Beschleunigungssensor gebildet ist.

8. Vorrichtung nach einem der vorherigen Ansprüche,
**dadurch gekennzeichnet, dass**
die Auswerteeinheit (30) mit einem Mittel (52, 54) zur Ausgabe eines akustischen und/oder optischen Alarmsignals verbunden ist.

9. Vorrichtung nach einem der vorherigen Ansprüche,
**dadurch gekennzeichnet, dass**
die Auswerteeinheit (30) mit einem Mittel (56) zur Kommunikation mit einer zentralen Überwachungseinrichtung und/oder mit einem Mobiltelefon verbunden ist.

10. Vorrichtung nach einem der vorherigen Ansprüche,
**dadurch gekennzeichnet, dass**
die Auswerteeinheit mit einem Mittel (58) zur Aufnahme von Einzelbildern oder Bildsequenzen verbunden ist.

11. Verfahren zur Erfassung einer Beschädigung eines Fahrzeugs, bei dem ein Schwingungssignal durch eine am Fahrzeug vorgesehene Sensoreinrichtung (10) aufgenommen und an eine mit der Sensoreinrichtung (10) verbundene Auswerteeinheit (30) übermittelt wird, durch welche eine Frequenzanalyse des Schwingungssignals durchgeführt wird.

12. Verfahren nach Anspruch 11,
**dadurch gekennzeichnet, dass**
das aufgenommene Schwingungssignal vor Durchführung der Frequenzanalyse gefiltert wird.

13. Verfahren nach Anspruch 11 oder 12,
**dadurch gekennzeichnet, dass**
in Abhängigkeit von der Frequenzanalyse des Schwingungssignals ein optischer und/oder akustischer Alarm ausgelöst wird.

14. Verfahren nach einem der Ansprüche 11 bis 13,
**dadurch gekennzeichnet, dass**
in Abhängigkeit von der Frequenzanalyse des Schwingungssignals eine zentrale Überwachungseinrichtung und/oder ein Mobiltelefon benachrichtigt wird.

15. Verfahren nach einem der Ansprüche 11 bis 14,
**dadurch gekennzeichnet, dass**
in Abhängigkeit von der Frequenzanalyse des Schwingungssignals ein Mittel zur Aufnahme von Einzelbildern oder Bildsequenzen aktiviert wird.
